# FASCICULE DE BREVET EUROPEEN

(11) **EP 3 336 709 B1**
(45) Date de publication et mention de la délivrance du brevet: **13.11.2024**
(21) Numéro de dépôt: 17204616.1
(22) Date de dépôt: 30.11.2017
(51) Int. Cl.: G06F 13/12, H04W 4/02, H04W 4/80

(54) **PROCÉDÉ D'UTILISATION D'UN POSTE DE TRAVAIL ÉTENDU, ET SYSTÈME D'UTILISATION D'UN POSTE DE TRAVAIL ÉTENDU ASSOCIÉ**
VERFAHREN ZUM EINSATZ EINES AUSGEDEHNTEN ARBEITSPLATZES, UND ENTSPRECHENDES EINSATZSYSTEM EINES AUSGEDEHNTEN ARBEITSPLATZES
METHOD FOR USING AN EXTENDED WORKSTATION, AND ASSOCIATED SYSTEM FOR USING AN EXTENDED WORKSTATION

(30) Priorité: 16.12.2016 FR 1662655
(43) Date de publication de la demande: 20.06.2018
(73) Titulaire: Orange, 92130 Issy-les-Moulineaux (FR)
(72) Inventeur: MARIE, Tiphaine, 14280 SAINT CONTEST (FR); DIALLO, Alpha-Oumar, 14000 CAEN (FR)
(74) Mandataire: Cabinet Beau de Loménie

(56) Documents cités:
- FR-A1- 3 030 990
- US-A1- 2014 237 125

## Description

La présente invention se rapporte au domaine des postes de travail informatiques, et concerne plus particulièrement un procédé et un système d'utilisation d'un poste de travail étendu, ainsi qu'un procédé et un système de création d'un poste de travail étendu.

Un poste de travail informatique comporte des objets mis à la disposition d'un utilisateur dans une zone prédéterminée de sorte que l'utilisateur puisse effectuer une tâche grâce à ces objets.

Ces objets sont par exemple des terminaux ou des périphériques, et chaque objet comporte une ou plusieurs ressources. Ces objets peuvent être publics ou privés.

Un objet public est un objet sans caractère personnel, pouvant être mis à la disposition de plusieurs personnes, tel qu'une imprimante, un écran de projection, etc.

Un objet privé est personnel et est donc mis à la disposition d'une seule personne. Ainsi, un objet privé est par exemple un téléphone portable, une montre connectée, un ordinateur personnel (Personal Computer en terminologie anglo-saxonne, ayant pour acronyme PC), etc.

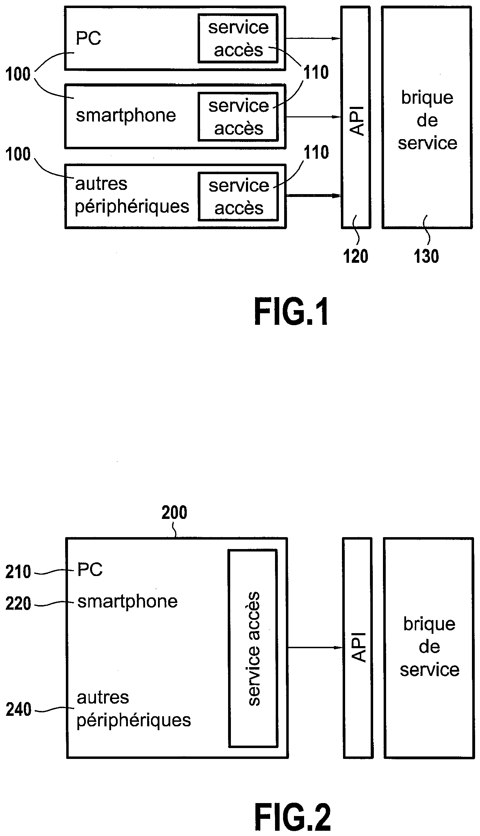

Comme illustré en **figure 1****,** de façon connue, un employé peut se servir, dans son environnement de travail, de plusieurs objets 100 publics ou privés.

Chaque objet 100 comporte une ou plusieurs ressources techniques, et au moins un service 110 permettant d'utiliser une ou plusieurs ressources.

Par « service », on entend un module logiciel, par exemple une application, comprenant toute la logique de service, spécifique au type de l'objet 100, associée à au moins une ressource technique. La logique de service est l'automate d'exécution de la ressource de l'objet 100, autrement dit les différentes opérations effectuées par l'objet 100 pour gérer la ressource.

Par exemple, un téléphone portable de type Smartphone comporte, parmi ses nombreuses ressources, un microphone permettant de capter un flux audio, et un service permettant de contrôler le flux, typiquement en traitant les requêtes de type « marche/arrêt » destinées au microphone, ainsi qu'en implémentant des mécanismes de traitement audio (codées, annulation d'écho, etc.).

Le service est développé pour le type de l'objet 100, à partir d'interfaces de programmation applicatives 120 (« Application Programming Interface » en

terminologie anglosaxonne, ayant pour acronyme API), ces API 120 étant mises à disposition par une brique de service 130.

Le service peut en outre permettre la connexion de l'objet 100 à la brique de service au moyen d'une API.

Par exemple, une brique de service de visioconférence peut comporter plusieurs API permettant d'utiliser cette brique de service. Pour chaque type d'objet, une application utilisant ces API peut être développée.

Ainsi un téléphone portable de type « smartphone », peut comporter une application de visioconférence qui permet de connecter le téléphone portable en audio et en visio sur un pont de conférence grâce au microphone et à la caméra du téléphone portable. De plus, un ordinateur personnel peut comporter un service web d'accès permettant de connecter l'ordinateur personnel en audio et en visio sur un pont de conférence en utilisant un microphone et une caméra de l'ordinateur personnel.

Cependant, la mise en oeuvre de la visioconférence est compliquée car elle nécessite l'installation d'une application de visioconférence sur chaque objet.

Le document FR 3 030 990 décrit un procédé de mise en relation d'un équipement récepteur avec un équipement émetteur.

### Objet et résumé de l'invention

La présente invention concerne un procédé d'utilisation d'un poste de travail étendu selon la revendication 1.

Ainsi, l'invention permet de ne pas installer, sur chaque objet et pour chaque ressource, un service spécifique permettant de contrôler ladite ressource (par exemple un service de visioconférence). L'invention permet en effet l'utilisation d'un service, installé sur un seul objet du poste de travail étendu, et permettant de contrôler une ou plusieurs ressources d'un ou plusieurs objets du poste de travail étendu.

L'invention permet de simplifier la mise en oeuvre du service, en permettant d'exploiter les ressources de chaque objet du poste de travail étendu de manière automatique depuis un objet du poste de travail étendu.

En outre, l'invention permet d'utiliser, pour la mise en oeuvre d'un service, une ressource d'un objet mis à disposition d'un utilisateur dans une zone prédéterminée, cet objet n'étant pas spécifiquement destiné à la mise en oeuvre du service. Ceci permet d'éviter d'équiper une zone, telle qu'une salle de conférence, avec des objets dédiés à la mise en oeuvre du service. Ainsi, par exemple, le microphone d'un téléphone portable peut être utilisé dans une salle de visioconférence, ce qui permet d'éviter l'achat de microphones dédiés et leur installation dans la salle.

Dans un mode de réalisation particulier, l'étape de détermination du premier objet et du deuxième objet comporte :
- une sous étape de détection d'une activité du premier objet, et/ou
- une sous étape de détection d'une activité du deuxième objet.

Ces sous étapes permettent de connaître, en temps réel, un ou plusieurs objets à portée de main de l'utilisateur et disponibles, c'est-à-dire aptes à être utilisés par l'utilisateur.

Dans un mode de réalisation particulier, l'étape de détermination du premier objet et du deuxième objet comporte :
- une sous étape de détection de l'entrée du premier objet dans une zone prédéfinie, le premier objet étant alors déterminé comme étant un objet apte à être utilisé par un utilisateur, et/ou
- une sous étape de détection de l'entrée du deuxième objet dans une zone prédéfinie, le deuxième objet étant alors déterminé comme étant un objet apte à être utilisé par un utilisateur.

Ces sous étapes permettent de connaître, en temps réel, un ou plusieurs objets à portée de main de l'utilisateur situé dans une zone telle qu'un bureau ou une salle de réunion.

Dans un mode de réalisation particulier, l'étape de détermination du premier objet et du deuxième objet comporte :
- une sous étape de détection du deuxième objet par le premier objet, le deuxième objet étant alors déterminé comme étant un objet apte à être utilisé par un utilisateur, et/ou
- une sous étape de détection du premier objet par le deuxième objet, ledit premier objet étant alors déterminé comme étant un objet apte à être utilisé par un utilisateur.

Ainsi, il est possible de déterminer tous les objets à proximité de l'utilisateur et accessibles par ce dernier à un instant t. Ces objets sont par exemple les objets présents dans une pièce telle qu'un bureau, une salle de réunion ou une salle de conférence, accessibles par l'utilisateur lorsque ce dernier se trouve dans la pièce.

Dans un mode de réalisation particulier, l'étape de détermination d'une ressource technique du deuxième objet comporte une sous étape de recherche de ressource technique par ledit deuxième objet.

Dans un mode de réalisation particulier, lequel la ressource technique est :
- une ressource de communication,
- une ressource logicielle,
- une ressource matérielle, ou
- une ressource d'interaction.

Dans un mode de réalisation particulier, l'au moins un moyen d'accès est une adresse IP du deuxième objet comportant la ressource et une adresse d'un port associé à la ressource, permettant l'utilisation de la ressource.

Dans un mode de réalisation particulier, l'étape d'utilisation comporte une sous étape de recommandation de la ressource technique déterminée, ladite recommandation étant établie en fonction d'un besoin d'un service et d'un contexte d'utilisation du service.

Dans un mode de réalisation particulier, l'étape d'utilisation comporte :
- une sous étape de réception, par le premier objet de l'association mémorisée à étape de mémorisation, envoyée par le serveur, et
- une sous étape de sélection de la ressource technique déterminée.

Dans un mode de réalisation particulier, l'étape d'utilisation comporte une sous étape de mise en relation d'une plateforme de service avec la ressource technique sélectionnée.

L'invention concerne en outre un système d'utilisation d'un poste de travail étendu selon la revendication 11.

Dans un mode particulier de réalisation, les différentes étapes du procédé d'utilisation d'un poste de travail étendu selon l'invention sont déterminées par des instructions de programmes d'ordinateurs.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente, de manière schématique, un poste de travail selon un art antérieur de l'invention ;
- la figure 2 représente, de manière schématique, un poste de travail étendu, créé par un procédé selon un exemple de mode de réalisation de l'invention ;
- la figure 3 représente, de manière schématique, un système d'utilisation d'un poste de travail étendu, selon un exemple de mode de réalisation de l'invention ;
- la figure 4A représente, de manière schématique, un premier objet d'un système d'utilisation d'un poste de travail étendu, selon un exemple de mode de réalisation de l'invention ;
- la figure 4B représente, de manière schématique, un serveur d'un système d'utilisation d'un poste de travail étendu, selon un exemple de mode de réalisation de l'invention ;
- la figure 5 représente, sous forme d'organigramme, les principales étapes d'un procédé d'utilisation d'un poste de travail étendu, selon un exemple de mode de réalisation de l'invention ;
- la figure 6 représente, sous forme d'organigramme, les principales étapes d'un procédé d'utilisation d'un poste de travail étendu, selon un exemple de mode de réalisation de l'invention ;
- les figures 7 à 10 représentent, de manière schématique, des objets déterminés dans des étapes de détermination de procédés d'utilisation d'un poste de travail étendu, selon des exemples de modes de réalisation de l'invention ;
- les figures 11 et 12 représentent, de manière schématique, une liste et une partie d'une liste obtenue après des étapes de mémorisation de procédés d'utilisation d'un poste de travail étendu, selon des exemples de modes de réalisation de l'invention ;
- la figure 13 représente, de manière schématique, un classement obtenu à une sous étape de classement d'un procédé d'utilisation d'un poste de travail étendu, selon un exemple de mode de réalisation de l'invention ;
- la figure 14 représente, de manière schématique, un système d'utilisation d'un poste de travail étendu selon un exemple de mode de réalisation de l'invention ;
- la figure 15 représente, de manière schématique, un système d'utilisation d'un poste de travail étendu selon un exemple de mode de réalisation de l'invention.

### Description détaillée de plusieurs modes de réalisation

La présente invention se rapporte au domaine des postes de travail informatiques, et concerne plus particulièrement un procédé et un système d'utilisation d'un poste de travail étendu, ainsi qu'un procédé et un système de création d'un poste de travail étendu.

Un poste de travail informatique comporte des objets mis à la disposition d'un utilisateur dans une zone prédéterminée de sorte que l'utilisateur puisse effectuer une tâche grâce à ces objets.

Ces objets tels sont par exemple des terminaux ou des périphériques. Ces objets peuvent être publics ou privés.

Un objet public est un terminal ou un périphérique sans caractère personnel, pouvant être mis à la disposition de plusieurs personnes, tel qu'une imprimante, un écran de projection, etc.

Un objet privé est personnel est donc mis à la disposition d'une seule personne. Ainsi, un objet privé est par exemple un téléphone portable, une montre connectée, un ordinateur personnel (Personal Computer en terminologie anglo-saxonne, ayant pour acronyme PC), etc.

La **figure 2** représente, de manière schématique, un poste de travail étendu 200 créé par un procédé selon un exemple de mode de réalisation de l'invention.

A un instant t, un utilisateur entre dans une salle de réunion avec un ordinateur personnel 210 et un téléphone portable 220 personnel de type Smartphone. La salle de réunion comporte d'autres objets 240, par exemple une caméra et un écran.

Le poste de travail étendu 200 comporte alors, de manière quasi instantanée et de manière automatique, l'ordinateur personnel 210, le téléphone portable 220, et les objets 240 de la salle de réunion.

Comme le montre la figure 2, l'invention permet de ne pas installer, sur chaque objet et pour chaque ressource, un service spécifique permettant de contrôler ladite ressource (par exemple un service de visioconférence). L'invention permet en effet l'utilisation d'un service, installé sur un seul objet du poste de travail étendu, et permettant de contrôler une ou plusieurs ressources d'un ou plusieurs terminaux 210, 220, 240 du poste de travail étendu 200. A cet effet, une application permettant de mettre à disposition une ou plusieurs ressources est installée sur les objets ayant une ou plusieurs ressources pouvant être contrôlées par un autre objet.

Dans un exemple, le service est un service de visioconférence et est installé sur l'ordinateur personnel 210. L'utilisateur peut alors lancer le service de visioconférence depuis l'ordinateur personnel 210, et :
- la caméra et l'écran peuvent être utilisés depuis l'ordinateur personnel 210 pour capter et afficher des flux médias,
- l'ordinateur personnel 210, qui permet d'accéder facilement aux documents et espaces partagés, et qui permet de produire du contenu et de l'afficher, peut être utilisé pour partager un document, et
- le microphone du téléphone portable 220 peut être utilisé depuis l'ordinateur personnel 210 pour capter le flux audio et l'écran du téléphone portable 220 peut être utilisé depuis l'ordinateur personnel 210 pour afficher une liste de participants.

Dans un autre exemple, le service est un système de communications interpersonnelles ou un service de poste de travail plus global.

L'invention permet de simplifier la mise en oeuvre du service, en permettant d'exploiter les ressources de chaque objet du poste de travail étendu de manière automatique depuis un objet du poste de travail étendu.

En outre, l'invention permet d'utiliser, pour la mise en oeuvre d'un service, une ressource d'un objet mis à disposition d'un utilisateur dans une zone prédéterminée, cet objet n'étant pas spécifiquement destiné à la mise en oeuvre du service. Ceci permet d'éviter d'équiper une zone, telle qu'une salle de conférence, avec des objets dédiés à la mise en oeuvre du service. Ainsi, par exemple, le microphone d'un téléphone portable peut être utilisé dans une salle de visioconférence, ce qui permet d'éviter l'achat de microphones dédiés et leur installation dans la salle.

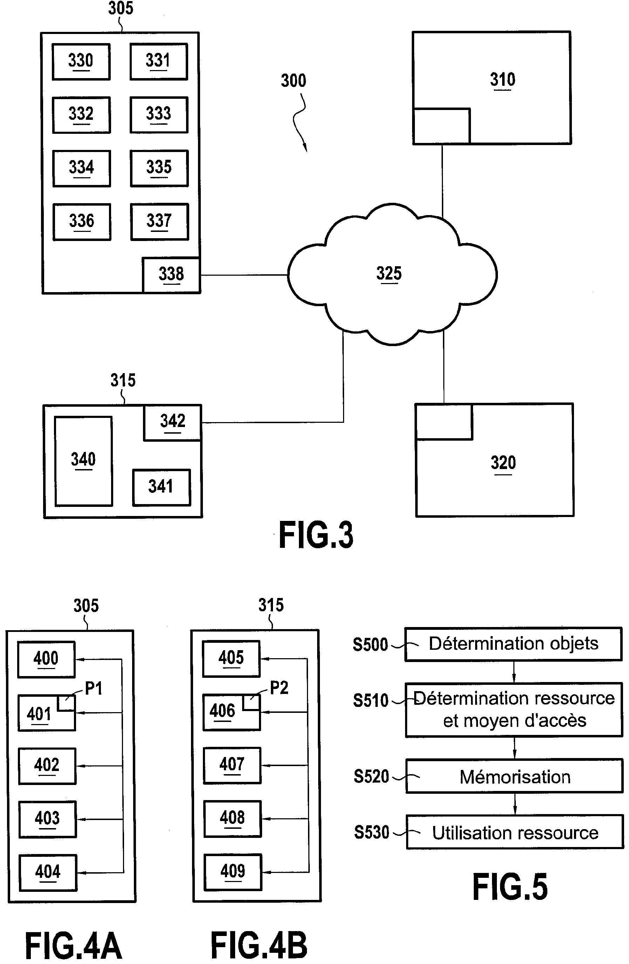

La **figure 3** représente, de manière schématique, un système 300 d'utilisation d'un poste de travail étendu, selon un exemple de mode de réalisation de l'invention.

Le système 300 comporte un premier objet 305, un deuxième objet 310, un serveur 315 et une plateforme 320 de service, connectés à un réseau de télécommunications 325.

Le réseau de télécommunications 325 est par exemple un réseau local. Toutefois cette hypothèse n'est pas limitative d'autres réseaux de télécommunications peuvent être utilisés, comme le réseau public internet ou un réseau propriétaire. En outre, aucune limitation n'est attachée à la manière dont les entités 305, 310, 315, et 320 sont connectées au réseau 325 : elles peuvent l'être par le biais d'une liaison filaire ou sans fil, d'un réseau d'accès mobile ou fixe, etc.

En variante, chaque entité 305, 310, 315, et 320 peut être connectée à plusieurs réseaux de télécommunications. Il est ainsi possible, dans un exemple, que le premier objet 305 communique avec le deuxième objet 310 via un premier réseau de télécommunications et communique avec le serveur 315 via un deuxième réseau de télécommunications.

Aucune limitation n'est attachée non plus à la nature des objets 305 et 310. Chaque objet 305, 310 peut ainsi être un clavier, une imprimante, un écran, une montre connectée, un terminal, par exemple un terminal mobile tel qu'un téléphone portable ou un ordinateur personnel, etc. En outre, chaque objet 305, 310 peut être public ou privé.

Le premier objet 305 peut comporter un module de détection d'activité 330 du premier objet 305, un module de détection de zone 331, un module de détection d'objet 332, un module de recherche de ressource 333, un module de recommandation 334, un module de sélection 335, un module d'utilisation 336, un module de déconnection 337 et/ou un module de communication 338. Les modules 330, 331, 332, 333, 334, 335, 336, 337 et/ou 338 peuvent être rassemblés en une application installée sur le premier objet 305.

Le serveur 315 comporte une liste 340 associée au poste de travail étendu, un module de gestion 341 de la liste 340 et/ou un module de communication 342. Cette liste 340 est par exemple stockée dans une mémoire cache, ou une base de données.

Les modules de communication 338 et 342 peuvent comporter un ou plusieurs sous modules de communication longue distance, comme par exemple un sous module Wifi et/ou un ou plusieurs sous modules de communication courte distance comme par exemple un sous module NFC (Near Field Communication) ou Bluetooth.

Dans un exemple, le deuxième objet 310 comporte les mêmes modules 330-338 que le premier objet 305. En variante le deuxième objet 310 comporte un ou plusieurs modules sensiblement identiques aux modules 330-338 du premier objet 305.

Dans un autre exemple de mode de réalisation de l'invention (non représenté), le système 300 ne comporte pas de serveur. Le premier objet 305 comporte alors la liste 340 et le module de gestion 341 de la liste 340.

Dans un autre exemple de mode de réalisation de l'invention (non représenté) combinable avec l'exemple susmentionné sans serveur, le système 300 ne comporte pas de plateforme de service.

Dans un exemple, les modules 330, 331, 332, 338, 341 et/ou 342 forment un module de détermination d'un premier objet et d'un deuxième objet, aptes à être utilisés par un utilisateur.

En outre, les modules 333, 338, 341 et/ou 342 forment un module de détermination d'une ressource technique du deuxième objet et d'un moyen d'accès à la ressource permettant l'utilisation de la ressource.

Le module 341 forme un module de mémorisation, dans un serveur, d'un identifiant de la ressource technique déterminée en association avec un identifiant du deuxième objet et un identifiant dudit moyen d'accès à la ressource.

De plus, les modules 334, 335, 336, 337, 338, 341 et/ou 342 forment un module d'utilisation, par le premier objet, de la ressource technique, via le moyen d'accès à ladite ressource.

Comme le montre la **figure 4A****,** le premier objet 305 présente l'architecture conventionnelle d'un ordinateur. Ce premier objet 305 comporte notamment un processeur 400, une mémoire morte 401 (de type « ROM »), une mémoire non volatile réinscriptible 402 (de type « EEPROM » ou « Flash NAND » par exemple), une mémoire volatile réinscriptible 403 (de type « RAM »), et une interface de communication 404.

La mémoire morte 401 du premier objet 305 constitue un support d'enregistrement conforme à un exemple de mode de réalisation de l'invention, lisible par le processeur 400 et sur lequel est enregistré un premier programme d'ordinateur P1 conforme à un exemple de mode de réalisation de l'invention. En variante, le premier programme d'ordinateur P1 est stocké dans la mémoire non volatile réinscriptible 402.

Ce premier programme d'ordinateur P1 définit des modules fonctionnels et logiciels ici, configurés pour mettre en oeuvre les étapes d'un procédé d'utilisation conforme à un exemple de mode de réalisation de l'invention (lorsque le système 300 ne comporte pas de serveur) ou une partie de ces étapes (lorsque le système 300 comporte le serveur 315). Ces modules fonctionnels s'appuient sur ou commandent les éléments matériels 400, 401, 402, 403 et 404 du premier objet 305 cités précédemment. Ils comprennent notamment ici, comme illustré sur la figure 3, le module de détection d'activité 330, le module de détection de zone 331, le module de détection d'objet 332, le module de recherche de ressource 333, le module de recommandation 334, le module de sélection 335, le module d'utilisation 336, le module de déconnection 337 et/ou le module de communication 338. Ils peuvent comprendre en outre, lorsque le système 300 ne comporte pas de serveur, le module de gestion 341.

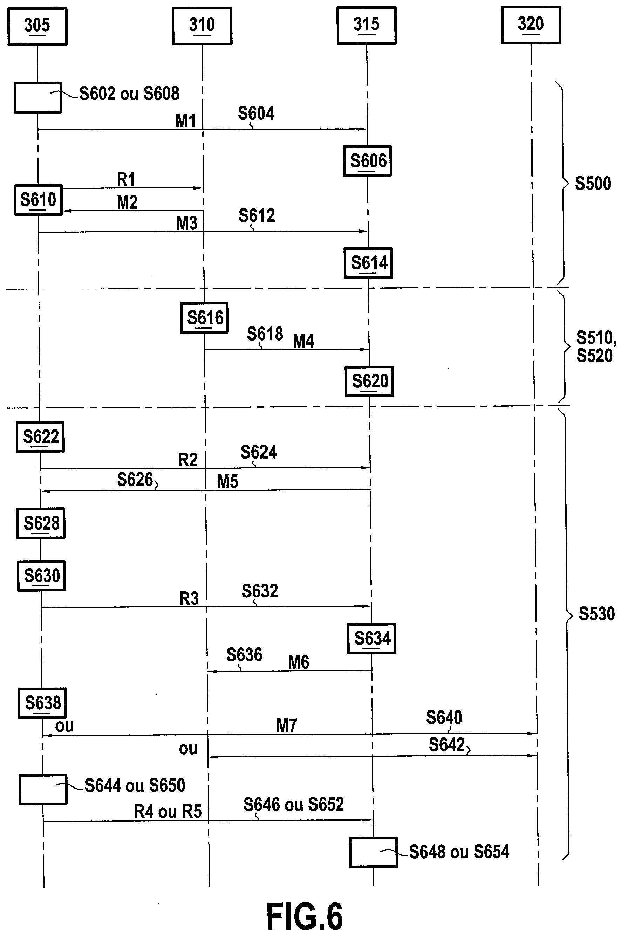

Les fonctions de ces différents modules sont décrites plus en détail ci-dessous, en référence aux étapes du procédé décrit en référence à la figure 6.

Le deuxième objet 310 peut présenter la même architecture que le premier objet 305, en comportant notamment un processeur, une mémoire morte, une mémoire non volatile réinscriptible, une mémoire volatile réinscriptible, et une interface de communication.

En outre, comme le montre la **figure 4B****,** le serveur 315 peut aussi présenter l'architecture conventionnelle d'un ordinateur, en comportant notamment un processeur 405, une mémoire morte 406, une mémoire non volatile réinscriptible 407, une mémoire volatile réinscriptible 408, et une interface de communication 409.

La mémoire morte 406 ou la mémoire non volatile réinscriptible 407 du serveur 315 constitue un support d'enregistrement conforme à un exemple de mode de réalisation de l'invention, lisible par le processeur 405 et sur lequel est enregistré un deuxième programme d'ordinateur P2 conforme à un exemple de mode de réalisation de l'invention.

Ce deuxième programme d'ordinateur P2 définit des modules fonctionnels et logiciels ici, configurés pour mettre en oeuvre une partie des étapes d'un procédé d'utilisation conforme à un exemple de mode de réalisation de l'invention. Ces modules fonctionnels s'appuient sur ou commandent les éléments matériels 405, 406, 407, 408 et 409 du serveur 315 cités précédemment. Ils comprennent notamment ici, comme illustré sur la figure 3, le module de gestion 341.

La **figure 5** représente un procédé d'utilisation d'un poste de travail étendu, selon un exemple de mode de réalisation de l'invention.

Le procédé est mis en oeuvre par un système d'utilisation d'un poste de travail étendu, par exemple le système 300 décrit en référence à la figure 3.

Dans une étape S500, un premier objet 305 et un deuxième objet 310 aptes à être utilisés par un utilisateur sont déterminés, le poste de travail étendu comprenant chaque objet 305, 310 déterminé lors de l'étape S500.

Ainsi, l'étape S500 permet de déterminer tous les objets 305, 310 étant à proximité de l'utilisateur et accessibles par ce dernier à un instant t. Ces objets sont par exemple les objets présents dans une pièce telle qu'un bureau, une salle de réunion ou une salle de conférence, accessibles par l'utilisateur lorsque ce dernier se trouve dans la pièce.

Dans une étape S510, une ressource technique du deuxième objet 310 déterminé à l'étape S500, ainsi qu'un moyen d'accès à la ressource permettant l'utilisation de ladite ressource sont déterminés.

Dans une étape S520, d'un identifiant de la ressource technique déterminée est mémorisé, en association avec un identifiant du deuxième objet 310, dans un serveur 315.

Dans une étape S530, la ressource technique déterminée à l'étape S510 est utilisée, via le moyen d'accès à ladite ressource, par le premier objet 305.

La **figure 6** représente un procédé d'utilisation d'un poste de travail étendu, selon un exemple de mode de réalisation de l'invention.

Le procédé est mis en oeuvre par un système d'utilisation d'un poste de travail étendu, par exemple le système 300 décrit en référence à la figure 3.

Dans une étape S500, un premier objet 305 et un deuxième objet 310 aptes à être utilisés par un utilisateur sont déterminés, le poste de travail étendu comprenant chaque objet 305, 310 déterminé lors de l'étape S500.

L'étape S500 peut comporter une sous étape S602 de détection d'une activité du premier objet 305, effectuée par un module de détection d'activité, typiquement le module de détection d'activité 330 du premier objet 305 de la figure 3.

L'activité détectée peut être une activité d'interaction, lorsque l'utilisateur interagit avec le premier objet 305, typiquement au moyen d'une interface homme-machine telle qu'une souris, un clavier, un écran tactile ou une molette.

L'activité détectée peut être une activité de communication, lorsque l'utilisateur communique avec un autre utilisateur au moyen du premier objet 305, par exemple en téléphonant, envoyant un message ou par vidéoconférence.

L'activité détectée peut être une activité d'échanges de données, lorsque le premier objet 305 communique avec un autre objet, typiquement en envoyant des requêtes ou des messages, au moyen d'un réseau de courte portée.

D'autres types d'activité peuvent en outre être détectés lors de cette sous étape S602 de détection d'une activité.

Lorsque le module de détection d'activité 330 détecte une activité, le premier objet 305 peut alors envoyer (sous étape S604) un message M1 à un serveur, typiquement le serveur 315 de la figure 3.

Le message M1 indique qu'une activité est détectée, et ainsi que le premier objet 305 est apte à être utilisé par l'utilisateur. Le message M1 peut par exemple être envoyé en temps réel.

Le message M1 peut comporter un identifiant de l'utilisateur et un identifiant du premier objet 305 lorsque l'activité détectée est une activité d'interaction ou une activité de communication, ou l'identifiant du premier objet 305 et un identifiant de l'autre objet lorsque l'activité est une activité d'échange de données, ou encore uniquement un identifiant du premier objet 305.

Le message M1 peut en outre comporter une requête de connexion au serveur 315, demandant par exemple l'ouverture d'un canal d'échange avec le serveur 315.

Le module de gestion 341 du serveur 315 crée ou met à jour la liste 340 correspondant au poste de travail étendu (sous étape S606), en associant l'identifiant du premier objet 305 avec l'identifiant de l'utilisateur et/ou l'identifiant de l'autre objet, ou en écrivant l'identifiant du premier objet 305.

En outre, le canal d'échange entre le premier objet 305 et le serveur 315 peut être créé.

En outre, l'étape S500 peut comporter une sous étape de détection d'une activité du deuxième objet 310, effectuée par un module de détection d'activité du deuxième objet 310, implémentée de la même manière que l'étape S602. Les étapes S604 et S606 peuvent alors être mises en oeuvre pour le deuxième objet 310.

Un ou plusieurs premiers objets 305 et/ou un ou plusieurs deuxièmes objets 310 peuvent ainsi être découverts, la liste 340 étant créée ou mise à jour en fonction. En effet, la sous étape S602 de détection d'une activité peut être mise en oeuvre plusieurs fois, par des objets 305, 310 différents. La sous étape S602 de détection d'une activité peut permettre en outre de détecter plusieurs activités d'un même objet 305, 310.

Ainsi, lorsque le système comporte plusieurs objets 305, 310, chaque objet 305, 310 peut mettre en oeuvre, une ou plusieurs étapes S602 et/ou une ou plusieurs étapes S604. Le serveur 315 peut alors effectuer l'étape S606 une ou plusieurs fois.

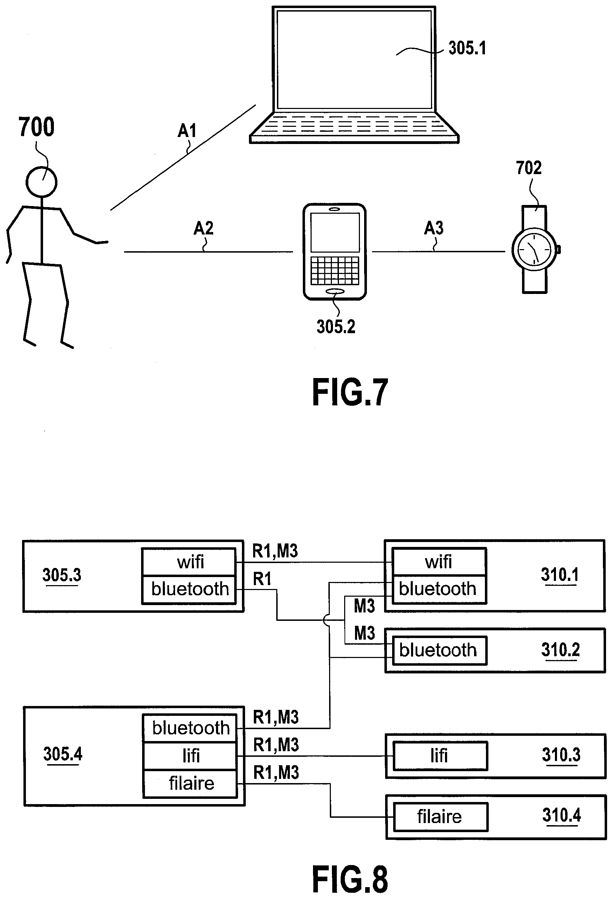

La **figure 7** représente, de manière schématique, un ordinateur personnel 305.1 et un téléphone portable 305.2 dont l'activité est détectée à la sous étape S602. Dans cet exemple, l'ordinateur personnel 305.1 détecte une activité d'interaction A1 avec un utilisateur 700 au moyen de la souris et/ou du clavier de l'ordinateur personnel 305.1. En outre, le téléphone portable 305.2 détecte une activité de communication A2 de l'utilisateur 700 et une activité d'échanges de données A3, typiquement au moyen d'un réseau courte portée, avec une montre connectée 702. La liste 340 peut alors comporter un lien entre l'identifiant de l'utilisateur et l'identifiant de l'ordinateur personnel 305.1, un lien entre l'identifiant de l'utilisateur et l'identifiant du téléphone portable 305.2, et un lien entre l'identifiant du téléphone portable 305.2 et l'identifiant de la montre connectée 702.

Les sous étapes S602, S604 et S606 permettent ainsi de connaître, en temps réel, un ou plusieurs objets 305, 310 à portée de main de l'utilisateur et disponibles, c'est-à-dire aptes à être utilisés par l'utilisateur. Ce ou ces objets 305, 310 constituent une première partie du poste de travail étendu.

Lorsque le système 300 ne comporte pas de serveur, les sous étapes S604 et S606 ne sont pas effectuées et c'est un module de gestion 341 d'un objet 305, 310 qui crée ou met à jour la liste 340, en fonction de l'activité détectée par le module de détection d'activité 330, ou en fonction d'informations provenant d'au moins un message reçu par l'objet 305, 310, ce message ayant été envoyé par un autre objet 305, 310 ayant effectué la sous étape S602.

Une sous étape S608 de détection de l'entrée du premier objet 305 dans une zone prédéfinie peut être effectuée. Cette sous-étape remplace alors la sous étape S602 ou est ajoutée à cette sous étape S602, le premier objet 305 étant alors déterminé comme étant un objet apte à être utilisé par un utilisateur.

La détection de l'entrée du premier objet 305 dans une zone est effectuée par un module de détection de zone du premier objet, typiquement le module de détection de zone 331 du premier objet 305 de la figure 3, par exemple lorsque l'utilisateur du premier objet 305 entre dans la zone avec le premier objet 305.

La zone prédéfinie est par exemple une salle de réunion, une salle de conférence, un bureau etc.

Le module de détection de zone 331 est apte à détecter une zone prédéterminée par géolocalisation, par détection d'un réseau accessible (par exemple un réseau Wifi local), par détection d'un tag NFC, ou par une autre technique de détection de proximité.

Le message M1 envoyé à l'étape S604 peut alors comporter un identifiant du premier objet 305 et un identifiant de la zone détectée. Ainsi, la liste 340 est créée ou mise à jour (sous étape S606) en associant, éventuellement en plus de l'identifiant du premier objet 305 avec l'identifiant de l'utilisateur et/ou l'identifiant de l'autre objet, l'identifiant du premier objet 305 et l'identifiant de la zone détectée.

De même, une sous étape de détection de l'entrée du deuxième objet 310 dans une zone prédéfinie peut être effectuée. Cette sous étape remplace alors la sous étape de détection d'une activité du deuxième objet 310 ou est ajoutée à cette sous étape, le deuxième objet 310 étant alors déterminé comme étant un objet apte à être utilisé par un utilisateur.

La détection de l'entrée du deuxième objet 310 dans une zone est effectuée par le module de détection de zone du deuxième objet 310, et est implémentée de la même manière que l'étape S608.

Les sous étapes de détection d'entrée d'un objet 305, 310 dans une zone permettent de savoir que l'utilisateur et l'objet 305, 310 entre dans la zone et donc qu'ils sont à proximité d'autres objets présents dans cette zone.

L'étape S500 de détermination d'un premier objet 305 et d'un deuxième objet 310 peut en outre comporter une sous étape S610 de détection du deuxième objet par le premier objet, le deuxième objet étant alors déterminé comme étant un objet apte à être utilisé par un utilisateur.

La détection du deuxième objet peut être effectuée par un module de détection d'objet du premier objet, par exemple le module de détection d'objet 332 du premier objet 305. Le deuxième objet détecté est par exemple l'objet 310 de la figure 3.

Le module de détection d'objet 332 est apte à détecter un deuxième objet 310 lorsque le premier objet 305 et le deuxième objet 310 peuvent communiquer au moyen d'au moins un même réseau de courte portée, le réseau étant typiquement un réseau sans fil (Wifi, Bluetooth, Lifi), ou un réseau filaire. Le réseau de courte portée utilisé est par exemple un réseau Wifi local, dans une zone limitée telle qu'une salle de conférence ou de réunion.

Par exemple, le module de détection d'objet 332 envoie une requête R1 de recherche au moyen de chaque sous module de communication courte distance du module de communication 338 du premier objet 305. Lorsque le deuxième objet 310 se trouve à proximité du premier objet 305, il reçoit la requête R1 de recherche et envoie un message M2 de présence au premier objet 305.

Le module de détection d'objet 332 est par exemple une application de type « radar ».

Lorsque le module de détection d'objet 332 détecte un deuxième objet 310, le premier objet 305 peut alors envoyer (sous étape S612) un message M3 au serveur 315, le message M3 indiquant qu'un deuxième objet 310 est détecté, et ainsi que ce deuxième objet 310 est apte à être utilisé par l'utilisateur.

Le message M3 peut par exemple être envoyé en temps réel. Le message peut comporter un identifiant du premier objet 305 et un identifiant du deuxième objet 310.

Le module de gestion 341 du serveur 315 met alors à jour la liste 340 correspondant au poste de travail étendu, en associant l'identifiant du premier objet 305 avec l'identifiant du deuxième objet 310 au moyen des informations envoyées (sous étape S614).

En outre, un canal d'échange entre le deuxième objet 310 et le serveur 315 peut être créé.

L'étape S500 de détermination d'un premier objet 305 et d'un deuxième objet 310 peut en outre comporter une sous étape de détection d'un premier objet 305 par un autre premier objet 305, une sous étape de détection d'un premier objet 305 par un deuxième objet 310, et/ou une sous étape de détection d'un deuxième objet 310 par un autre deuxième objet 310. Ces sous étapes sont mises en oeuvre de la même manière que la sous étape S610.

Un ou plusieurs objets 305, 310 peuvent ainsi être découverts lors de la mise en oeuvre de la sous étape S610, la liste 340 étant créée ou mise à jour en fonction. En effet, dans le cas où le système comporte plusieurs objets 305, 310, un ou plusieurs de ces objets 305, 310 peut mettre en oeuvre la sous étape S610. En outre, plusieurs objets 305, 310 peuvent recevoir une requête R1 provenant d'un autre objet 305, 310 et envoyer un message M3 en réponse à cette requête R1.

Les sous étapes S610, S612 et S614 permettent ainsi de connaître, en temps réel, un ou plusieurs objets 305, 310 à portée de main de l'utilisateur et disponibles, c'est-à-dire aptes à être utilisés par l'utilisateur. Ce ou ces objets 305, 310 constituent une deuxième partie du poste de travail étendu.

La **figure 8** représente, de manière schématique, quatre objets de type « deuxièmes objets » 310.1, 310.2, 310.3, 310.4 détectés, dans des sous étapes S610, par deux objets de type « premiers objets » 305.3 et 305.4.

Le premier objet 305.3 comporte un sous module de communication Wifi et un sous module de communication Bluetooth, le premier objet 305.4 comporte un sous module de communication Bluetooth, un sous module de communication Lifi et un sous module de communication filaire, le deuxième objet 310.1 comporte un sous module de communication Wifi et un sous module de communication Bluetooth, le deuxième objet 310.2 comporte un sous module de communication Bluetooth, le deuxième objet 310.3 comporte un sous module de communication Lifi, et le deuxième objet 310.4 comporte un sous module de communication filaire.

Le deuxième objet 310.1 peut ainsi être détecté au moyen d'une requête R1 envoyée par le sous module de communication Wifi du premier objet 305.3, une requête R1 envoyée par le sous module de communication Bluetooth du premier objet 305.3 et/ou une requête R1 envoyée par le sous module de communication Bluetooth du premier objet 305.4, le deuxième objet 310.2 peut être détecté au moyen d'une requête R1 envoyée par le sous module de communication Bluetooth du premier objet 305.3 et/ou au moyen d'une requête R1 envoyée par le sous module de communication Bluetooth du premier objet 305.4, le deuxième objet 310.3 peut être détecté au moyen d'une requête R1 envoyée par le sous module de communication Lifi du premier objet 305.4, et le deuxième objet 310.4 peut être détecté au moyen d'une requête R1 envoyée par le sous module de communication filaire du premier objet 305.4.

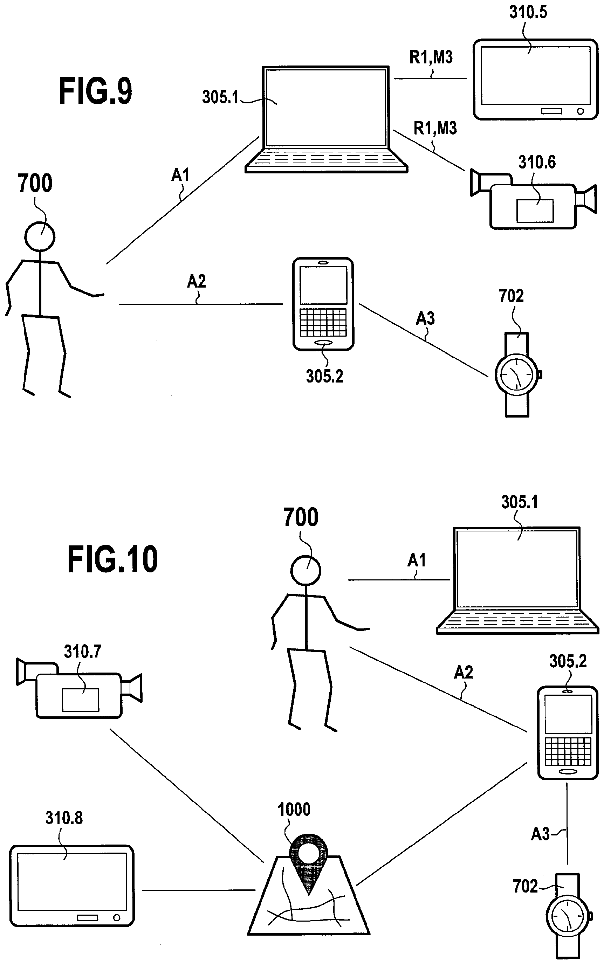

La **figure 9** représente, de manière schématique, une tablette 310.5 et une caméra 310.6 détectées par l'ordinateur personnel 305.1 de la figure 7. La liste 340 peut alors comporter, en plus du lien entre l'identifiant de l'utilisateur et l'identifiant de l'ordinateur personnel 305.1, du lien entre l'identifiant de l'utilisateur et l'identifiant du téléphone portable 305.2, et du lien entre l'identifiant du téléphone portable 305.2 et l'identifiant de la montre connectée 702, un lien entre l'identifiant de l'ordinateur personnel 305.1 et l'identifiant de la tablette 310.5 et un lien entre l'identifiant de l'ordinateur personnel 305.1 et l'identifiant de la caméra 310.6.

Lorsque le système 100 ne comporte pas de serveur, les sous étapes S612 et S614 ne sont pas effectuées et c'est un module de gestion 341 d'un objet 305 qui met à jour la liste 340.

Dans une variante où le premier objet 305 est associé à une zone prédéfinie à l'étape S606, la sous étape S610 de détection du deuxième objet par le premier objet peut être remplacée par une sous étape d'association (non représentée) du deuxième objet 310 à une zone prédéfinie. La sous étape d'association est par exemple effectuée par un utilisateur lors de l'installation du deuxième objet 310 dans la zone prédéfinie. Le module de gestion 341 du serveur 315 met alors à jour la liste 340 en créant un lien entre l'identifiant du deuxième objet 310 et l'identifiant de la zone prédéfinie. Lorsqu'un premier objet 305 détecte (étape S608) une zone prédéfinie associée au deuxième objet 310 lors de l'étape d'association, il est ainsi déterminé que le deuxième objet 310 est apte à être utilisé par l'utilisateur du premier objet 305.

De même, les sous étapes de détection d'un premier objet par un autre premier objet, de détection d'un premier objet par un deuxième objet et de détection d'un deuxième objet par un autre deuxième objet peuvent être remplacées par des sous étapes d'association de l'objet à une zone prédéfinie.

La **figure 10** représente, de manière schématique, une caméra 310.7 et une tablette 310.8 ayant été associées à une zone prédéfinie 1000. La figure 10 représente en outre l'ordinateur personnel 305.1 et le téléphone portable 305.2 de la figure 7. La liste 340 comporte alors un lien entre l'identifiant de la caméra 310.7 et l'identifiant de la zone prédéfinie 1000, un lien entre l'identifiant de la tablette 310.8 et l'identifiant de la zone prédéfinie, le lien entre l'identifiant de l'utilisateur et l'identifiant de l'ordinateur personnel 305.1, le lien entre l'identifiant de l'utilisateur et l'identifiant du téléphone portable 305.2, et le lien entre l'identifiant du téléphone portable 305.2 et l'identifiant de la montre connectée 702.

Dans cet exemple, l'utilisateur 700 du téléphone portable 305.2 de la figure 7 entre dans la zone prédéfinie 1000. Le téléphone portable 305.2 détecte alors la zone prédéfinie 1000 dans une sous étape S608. La liste 340 peut alors comporter, en plus des liens mentionnés au paragraphe précédent, un lien entre l'identifiant de la zone prédéfinie 1000 et l'identifiant du téléphone portable 305.2.

Dans une étape S510, une ressource technique du deuxième objet 310 et un moyen d'accès à la ressource, permettant l'utilisation de la ressource, sont déterminés.

L'étape S510 comporte une sous étape S616 de recherche de ressource technique par le deuxième objet 310.

La sous étape S616 recherche de ressource technique peut être effectuée par un module de recherche de ressource du deuxième objet, par exemple le module de recherche de ressource 333 du deuxième objet 310 de la figure 3. En outre, la sous étape S616 peut être effectuée par plusieurs deuxièmes objets 310 différents, par exemple chaque deuxième objet 310. Pour chaque deuxième objet 310 effectuant la sous étape S616, une ou plusieurs ressources peuvent être recherchées et ainsi déterminées.

La ressource technique peut être une ressource de communication, par exemple la capacité de l'objet à communiquer au moyen d'un réseau tel qu'un réseau sans fil (Wifi, Bluetooth, Lifi, etc.), ou un réseau filaire.

La ressource technique peut être une ressource logicielle, telle qu'un navigateur Web, un logiciel, une application etc.

La ressource technique peut être une ressource matérielle, par exemple un écran, un microphone, une caméra, un haut-parleur, etc.

La ressource technique peut être une ressource d'interaction, par exemple une souris, un clavier, un écran tactile, etc.

En outre, le moyen d'accès à la ressource est un moyen permettant à un service d'utilisation de la ressource d'utiliser la ressource, typiquement une adresse IP de l'objet comportant la ressource et le numéro d'un port associé à la ressource, pouvant par exemple permettre la récupération d'un flux de la ressource. Le moyen d'accès peut en outre comporter un code de sécurité propriétaire, ce code permettant de limiter l'accès à la ressource à des objets autorisés.

Lorsque le module de recherche de ressource 333 détecte une ressource technique ainsi qu'un moyen d'accès à la ressource, le deuxième objet 310 peut envoyer (étape S618) un message M4 au serveur 315, le message M4 indiquant qu'une ressource technique du deuxième objet 310 et qu'un moyen d'accès à la ressource ont été détectés, et ainsi que la ressource technique peut être utilisée par l'utilisateur.

Le message M4 peut par exemple être envoyé en temps réel. Le message M4 peut comporter un identifiant du deuxième objet 310, un identifiant de la ressource, un identifiant du moyen d'accès et peut en outre comporter une ou plusieurs informations relatives à la ressource, décrivant la ressource. Dans l'exemple où la ressource est un écran, le message M4 peut ainsi comporter une information sur la taille de l'écran et une information sur la résolution de l'écran.

Le message M4 peut en outre comporter une requête de connexion au serveur 315, demandant par exemple l'ouverture d'un canal d'échange avec le serveur 315.

Dans un exemple, une application d'un deuxième objet 310 de type téléphone portable permet de transformer une caméra du téléphone portable en caméra IP. Le message M4 peut alors comporter l'identifiant de la caméra, l'identifiant du téléphone portable, ainsi que l'adresse IP du téléphone, le numéro de port de la caméra et un code de sécurité propriétaire. Ainsi, un premier objet 305, par exemple un ordinateur portable, se connectant au serveur 315 avec le même processus de connexion et le même code de sécurité propriétaire peut utiliser la caméra du téléphone portable comme une caméra IP.

Le module de gestion 341 du serveur 315, dans une étape S620, met alors à jour la liste 340 correspondant au poste de travail étendu en associant l'identifiant du deuxième objet 310, l'identifiant de la ressource, l'identifiant du moyen d'accès, et éventuellement les informations relatives à la ressource.

L'étape S620 est ainsi une étape de mémorisation, dans un serveur, d'un identifiant de la ressource technique déterminée en association avec un identifiant du deuxième objet 310 et un identifiant dudit moyen d'accès à ladite ressource.

En outre, le canal d'échange entre le deuxième objet 310 et le serveur 315 peut être créé.

Un ou plusieurs premiers objets 305 peuvent en outre mettre en oeuvre une sous étape S616 de recherche de ressource technique, afin de rechercher une ou plusieurs de leurs ressources techniques. La sous étape S616 de recherche de ressource technique peut ainsi être effectuée par un module de recherche de ressource du premier objet, par exemple le module de recherche de ressource 333 du premier objet 305 de la figure 3.

Ainsi, les sous étapes S616, S618 et S620 permettent de connaître, en temps réel, une ou plusieurs ressources d'un ou plusieurs deuxièmes objets 310 du poste de travail étendu, et éventuellement une ou plusieurs ressources d'un ou plusieurs premiers objets 305 du poste de travail étendu. Ces ressources sont alors aptes à être utilisées par l'utilisateur.

Lorsque le système 300 ne comporte pas de serveur, le message M4 de la sous étape S618 est envoyé à un premier objet 305 et la sous étape S620 n'est pas effectuée. Un module de gestion 341 du premier objet 305 met à jour la liste 340, en fonction des données du message M4 reçu.

L'étape S510 peut comporter, pour au moins un objet 305, 310 du poste de travail étendu, une sous étape d'association (non représentée) d'au moins une ressource technique et d'au moins un moyen d'accès à la ressource avec l'objet. Cette sous étape d'association s'ajoute à la sous étape S616 de recherche ou remplace la sous étape S616 de recherche.

La sous étape d'association consiste à créer un lien entre l'identifiant d'un objet et l'identifiant d'une ou plusieurs ressources, en fonction du type de l'objet.

Par exemple, pour un type donné de smartphone, les capacités d'interaction (par exemple tactile, etc.) de communication (par Bluetooth, Wifi etc.) et matérielles (par exemple écran, microphone, haut-parleur etc.) sont connues. Les moyens d'accès sont en outre connus.

Le module de gestion 341 du serveur 315 met alors à jour la liste 340 en fonction de ces connaissances, en créant un lien entre le premier objet 305 ou le deuxième objet 310, la ressource technique et le moyen d'accès.

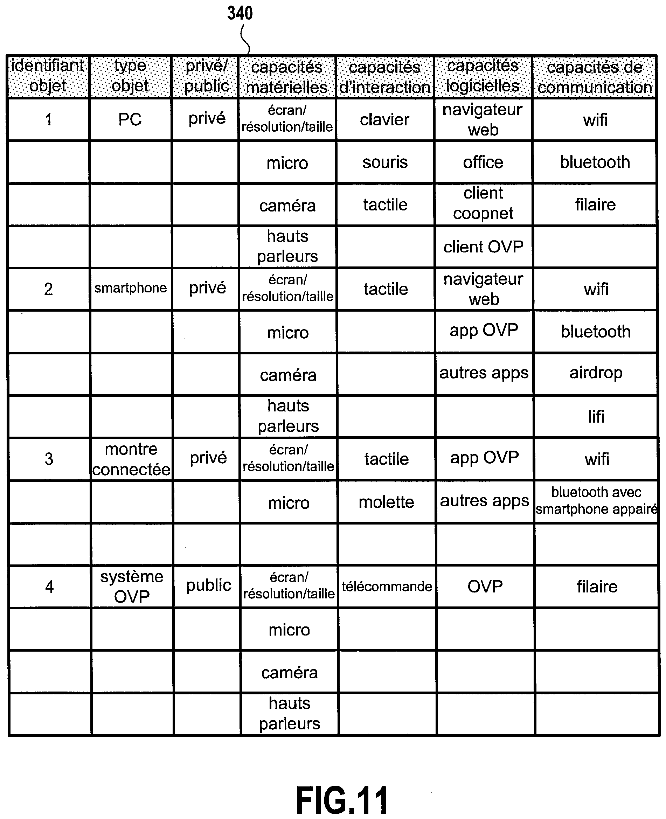

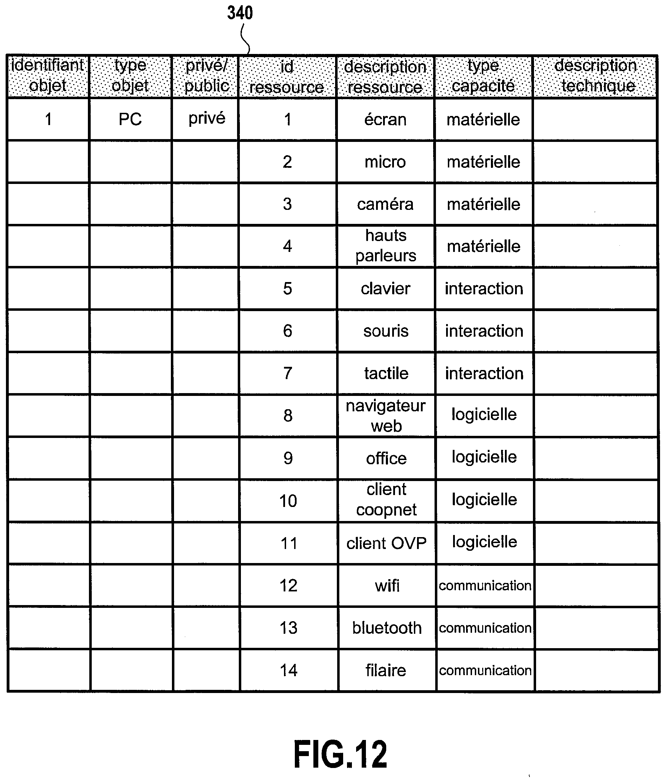

La **figure 11** représente, de manière schématique, un exemple de liste 340 après l'étape de mémorisation S520. La **figure 12** représente, de manière schématique, un exemple d'une partie de liste 340 après l'étape de mémorisation S520.

Dans une étape S530, une ressource technique est utilisée, par le premier objet 305, via le moyen d'accès à la ressource. Un ou plusieurs premiers objets 305 effectuent chacun une telle étape S530 d'utilisation. Le premier objet 305 peut en outre utiliser ses propres ressources techniques.

Plus précisément, dans une sous étape S622, un premier objet, par exemple le premier objet 305 de la figure 3, reçoit une commande d'utilisation d'un service, émise par l'utilisateur du premier objet 305. Le service comporte au moins une fonctionnalité.

Le service est par exemple un service de visioconférence, la commande d'utilisation étant l'ouverture d'une application dédiée audit service. Les fonctionnalités du service de visioconférence sont par exemple la capture d'un son ou d'une image, ou la restitution d'un son ou d'une image.

Le premier objet 305 envoie ensuite (sous étape S624) une requête R2 de transmission de la liste 340 au serveur 315. Le serveur 315 envoie alors la liste 340 dans un message M5 (sous étape S626).

Dans un exemple, la requête R2 de transmission comporte un code de sécurité propriétaire. Le serveur 315 envoie alors, dans le message M5, les associations des ressources ayant un moyen d'accès comportant un code de sécurité propriétaire correspondant au code de sécurité propriétaire envoyé dans la requête R2.

Le premier objet 305 peut alors afficher la liste 340, afin de présenter les objets 305, 310 et les ressources disponibles de cette liste 340 à un utilisateur. Cette liste 340 peut être présentée sous forme de matrice comportant d'un côté les objets du poste de travail étendu et d'un autre côté, pour chaque objet, les ressources détectées. Un mapping, c'est-à-dire un tableau relationnel entre la liste des ressources disponibles et la liste des fonctionnalités proposées, peut être proposé afin d'optimiser et d'enrichir l'expérience de l'utilisateur. L'invention permet également de créer un réseau d'entité autour de l'utilisateur, chaque entité pouvant être une zone, un objet, un contenu, ou une autre personne (en effet, un objet appartenant à un autre utilisateur peut être utilisé si cet autre utilisateur donne l'autorisation de le faire). Ce réseau d'entité peut être généralisé et utilisé à d'autres fins, comme à des fins d'interactions augmentées avec les entités environnantes.

Ainsi, un contenu peut être partagé entre plusieurs utilisateurs présents dans une salle, en utilisant une des ressources disponibles. Par exemple, un document, tel qu'un document relatif à une réunion pour laquelle une salle de réunion a été réservée, ou une affiche présente et référencée dans une zone, peut être partagé en utilisant l'écran le plus adapté de la salle de réunion ou de la zone.

Lorsque le système ne comporte pas de serveur, les étapes S624 et S626 ne sont pas effectuées, la liste 340 étant déjà à la disposition d'un premier objet 305.

Le module de recommandation 334 du premier objet 305 peut ensuite recommander, dans une sous étape S628, au moins une des ressources déterminées à l'étape S510. Dans un exemple, pour chaque fonctionnalité du service, le module de recommandation 334 du premier objet 305 recommande une ressource. Cette recommandation, particulièrement intéressante lorsque plusieurs ressources du même type ont été déterminées à l'étape S510, est établi en fonction du besoin du service et du contexte d'utilisation du service, de sorte à ce que la ressource la plus adaptée à la fonctionnalité soit utilisée.

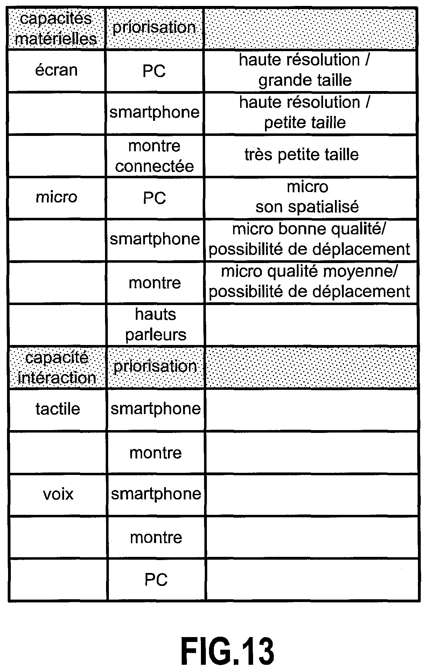

La **figure 13** représente, de manière schématique, un exemple de classement, pour plusieurs types de ressources déterminées à l'étape S510 (« écran », « micro », « tactile » et « voix »), des ressources des objets 305, 310 du poste de travail étendu. Comme visible sur la figure 10, le classement peut être effectué en fonction des informations relatives à la ressource, transmises dans le message M4. Ainsi, pour le type de ressource « écran », l'écran de l'ordinateur portable, de grande taille et de haute résolution, est classé avant l'écran de téléphone portable, qui est de petite taille, l'écran de téléphone portable étant classé avant l'écran de la montre connectée, ce dernier écran étant de très petite taille.

Dans une sous étape S630, au moins une ressource technique est sélectionnée, par exemple par l'utilisateur ou par un module de sélection 335 du premier objet 305. L'utilisateur peut suivre la recommandation du module de recommandation 334, ou l'ignorer.

Le premier objet 305 envoie alors au serveur 315, dans une sous étape S632, une requête R3 de réservation de la ressource sélectionnée.

En variante, les étapes S624, S626, S628, S630 et S632 ne sont pas effectuées, le premier objet 305 envoie une requête d'utilisation au serveur 315, et le serveur 315 sélectionne une ou plusieurs ressources techniques.

Le serveur 315 met à jour la liste 340 pour indiquer que la ressource est sélectionnée (sous étape S634). Le serveur 315 peut en outre envoyer, dans une sous étape S636, un message M6 au deuxième objet 310 pour prévenir le deuxième objet 310 que la ressource a été réservée, et éventuellement un message au premier objet 305 pour prévenir le premier objet 305 que la ressource du deuxième objet 310 a été réservée.

Lorsque le système ne comporte pas de serveur, les étapes S632, S634 et S636 ne sont pas effectuées. La liste 340 étant déjà à la disposition d'un premier objet 305, le premier objet 305 met à jour la liste 340 pour indiquer que la ressource est sélectionnée, puis envoie un message au deuxième objet 310 pour prévenir le deuxième objet 310 que la ressource a été réservée.

Dans une sous étape S638, le module d'utilisation 336 du premier objet 305 utilise la ressource technique sélectionnée, via le moyen d'accès à la ressource.

Le module d'utilisation 336 est un module logiciel du premier objet 305 comprenant toute la logique de service associée à la ressource sélectionnée du deuxième objet 310, autrement dit les différentes opérations effectuées par le premier objet 305 pour gérer la ressource sélectionnée du deuxième objet 310.

Le module d'utilisation 336 est adapté au premier objet 305 et plus particulièrement à son environnement d'exécution et aux langages qu'il supporte. Le module d'utilisation 336 est ainsi programmé pour s'exécuter en faisant appel aux primitives de l'environnement d'exécution du premier objet 305 tout en sollicitant la ressource du deuxième objet 310, via le moyen d'accès à la ressource.

Dans un exemple, le module d'utilisation 336 utilise un logiciel du deuxième objet 310, ou un écran tactile du deuxième objet 310, cet écran tactile permettant d'interagir avec d'autres ressources du service.

Dans un exemple, l'utilisation de la ressource par le module d'utilisation 336 est effectuée de manière sécurisée. Un mot de passe est par exemple demandé.

En variante, le premier objet 305 ou le serveur 315 met en relation une plateforme de service, par exemple la plateforme de service 320 de la figure 3, avec la ressource technique sélectionnée.

Plus précisément, le premier objet 305 envoie, dans un message M7, une liste des ressources sélectionnées à la plateforme de service 320, la liste comportant au moins une ressource sélectionnée (sous étape S640). En variante, le serveur 315 envoie la liste des ressources sélectionnées à la plateforme de service 320.

La plateforme de service 320 utilise alors, dans une sous étape S642, la ressource sélectionnée, via le moyen d'accès à la ressource.

Lorsque le module de déconnection 337 du premier objet 305 reçoit une commande de déconnection du service (sous étape S644), par exemple lorsque l'utilisateur ferme l'application dédiée au service, le module de déconnection 337 envoie, dans une sous étape S646, une requête R4 d'annulation de la réservation de la ressource au serveur 315. Le serveur 315 met à jour la liste 340 pour indiquer que la ressource n'est plus sélectionnée (sous étape S648).

De plus, lorsque le module de déconnection 337 détecte un dysfonctionnement (sous étape S650), le module de déconnection 337 envoie, dans une étape S652, une requête R5 d'annulation de la réservation de la ressource au serveur 315, qui peut aussi être une requête de réservation d'une autre ressource. Le serveur 315 met à jour la liste 340 pour indiquer que la ressource n'est plus sélectionnée et éventuellement pour indiquer que l'autre ressource est sélectionnée (sous étape S654).

Lorsque le système 100 ne comporte pas de serveur, les sous étapes S646 et S648 ou S650 et S652 ne sont pas effectuées et c'est un module de gestion 341 d'un premier objet 305 qui met à jour la liste 340.

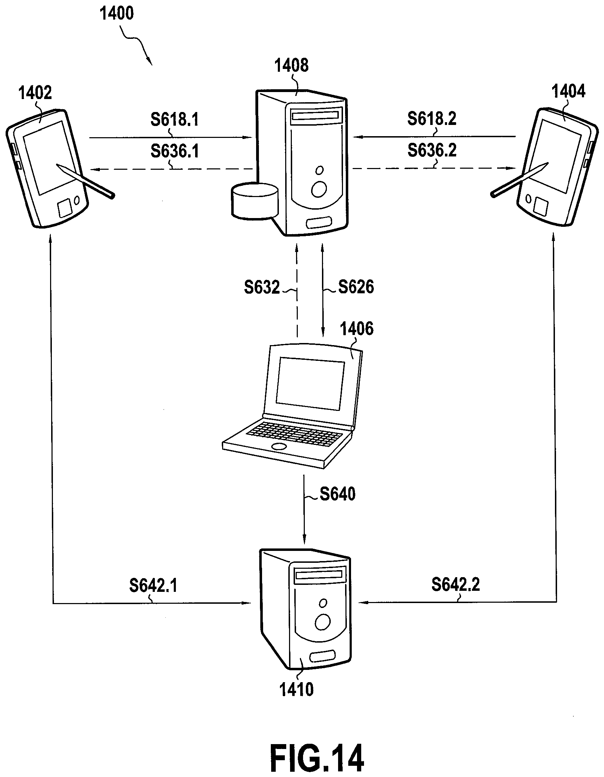

La **figure 14****,** représente, de manière schématique, un système 1400 d'utilisation d'un poste de travail étendu selon un exemple de mode de réalisation de l'invention.

Dans cet exemple, le système 1400 comporte un téléphone portable 1402 de type smartphone, un autre téléphone portable 1404 de type smartphone, un ordinateur personnel 1406, un serveur 1408 et une plateforme de conférence 1410.

Après l'étape S500 de détermination du téléphone portable 1402, de l'autre téléphone portable 1404 et de l'ordinateur personnel 1406, chaque téléphone portable 1402, 1404 détermine qu'il comporte comme ressource un microphone, et une caméra (sous étapes S616 de l'étape S510 de détermination des ressources techniques). Ces ressources techniques, ainsi que leurs moyens d'accès, sont envoyés au serveur 1408, dans les sous étapes S618.1 et S618.2.

Le serveur 1408 mémorise alors (étape S520) un identifiant de chaque microphone et caméra en association avec le téléphone portable 1402, 1404 associé.

Dans une étape S530 d'utilisation, l'ordinateur personnel 1406 récupère les informations mémorisées par le serveur 1408 (sous étape S626).

Ensuite, l'ordinateur personnel 1406 envoie au serveur 1408, dans une sous étape S632, une requête de réservation indiquant que le microphone du téléphone portable 1402 et la caméra de l'autre téléphone portable 1404 sont sélectionnés.

Le serveur 1408 envoie alors un message au téléphone portable 1402 pour le prévenir que son microphone a été réservé (sous étape S636.1) et un message à l'autre téléphone portable 1404 pour le prévenir que sa caméra a été réservée (sous étape S636.2).

L'ordinateur personnel 1406 envoie ensuite une liste des ressources sélectionnées à la plateforme de service 1410, la liste comportant ainsi le microphone du téléphone portable 1402 et la caméra du téléphone portable 1404 (sous étape S640).

La plateforme de service 1410 utilise alors, dans une sous étape S642.1, le microphone du téléphone portable 1402 via le moyen d'accès à ce microphone, et, dans une sous étape S642.2, la caméra du téléphone portable 1404 via le moyen d'accès à cette caméra.

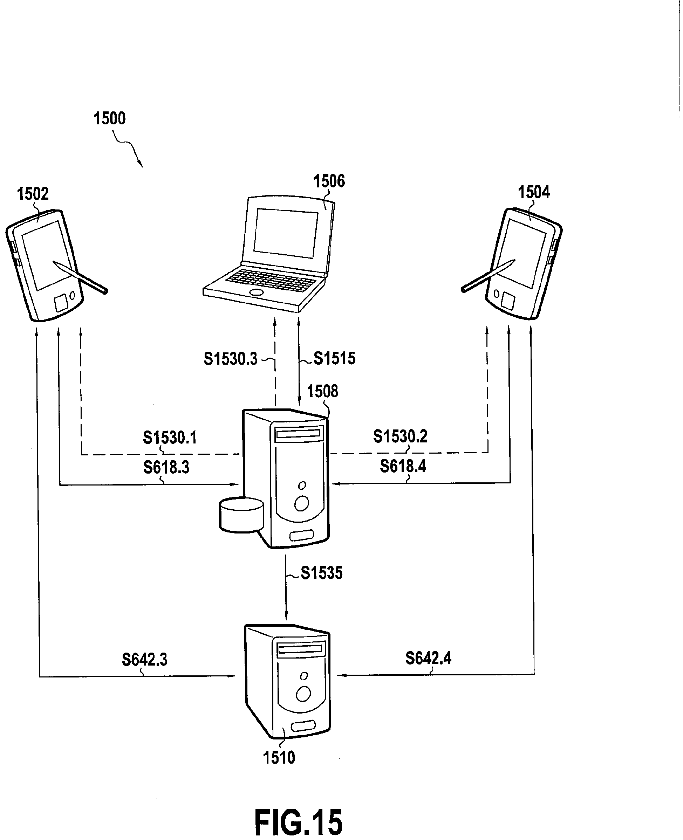

La **figure 15****,** représente, de manière schématique, un système 1500 d'utilisation d'un poste de travail étendu selon un exemple de mode de réalisation de l'invention.

Dans cet exemple, le système 1500 comporte un téléphone portable 1502 de type smartphone, un autre téléphone portable 1504 de type smartphone, un ordinateur personnel 1506, un serveur 1508 et une plateforme de conférence 1510.

Après l'étape S500 de détermination du téléphone portable 1502, de l'autre téléphone portable 1504 et de l'ordinateur personnel 1506, chaque téléphone portable 1502, 1504 détermine qu'il comporte comme ressource un microphone, et une caméra (sous étapes S616 de l'étape S510 de détermination des ressources techniques). L'ordinateur personnel 1506 peut également envoyer ses propres ressources disponibles. Ces ressources techniques, ainsi que leurs moyens d'accès, sont envoyés au serveur 1508, dans les sous étapes S618.3 et S618.4.

Le serveur 1508 mémorise alors (étape S520) un identifiant de chaque microphone et caméra en association avec le téléphone portable 1502, 1504 associé.

Dans une étape S530 d'utilisation, l'ordinateur personnel 1506 envoie une requête d'utilisation, sous la forme d'une commande de connexion à la plateforme 1510 au serveur 1508 (sous étape S1515). Le serveur 1508 sélectionne alors le microphone du téléphone portable 1502 et la caméra du téléphone portable 1504 comme ressource.

Le serveur 1508 envoie alors un message au téléphone portable 1502 pour le prévenir que son microphone a été réservé (sous étape S1530.1) et un message au téléphone portable 1504 pour le prévenir que sa caméra a été réservée (sous étape 1530.2). Le serveur 1508 envoie en outre un message (sous étape S1530.3) à l'ordinateur personnel 1506 pour le prévenir que le microphone du téléphone portable 1502 et la caméra de l'autre téléphone portable 1504 ont été réservés.

Le serveur 1508 envoie ensuite, après avoir ouvert la connexion à la plateforme de service 1510, une liste des ressources sélectionnées à la plateforme de service 1510, la liste comportant ainsi le microphone du téléphone portable 1502 et la caméra du téléphone portable 1504 (sous étape S1535).

La plateforme de service 1510 utilise alors, dans une sous étape S642.3, le microphone du téléphone portable 1502 via le moyen d'accès à ce microphone, et, dans une sous étape S642.4, la caméra du téléphone portable 1504 via le moyen d'accès à cette caméra.

## Revendications

1. Procédé d'utilisation d'un poste de travail étendu dans le cadre d'un service de vidéoconférence, le procédé comportant :
• une étape de détermination (S500) d'un premier objet (305) et d'un deuxième objet (310) aptes à être utilisés par un utilisateur, le poste de travail étendu comprenant chacun des premiers et deuxième objets (305, 310), l'étape de détermination étant mise en oeuvre par le premier objet (305) et/ou le deuxième objet (310) ;
• une étape de détermination (S510), par le deuxième objet (310), d'une ressource technique du deuxième objet (310) et d'un moyen d'accès à ladite ressource permettant l'utilisation de ladite ressource pour la mise en oeuvre dudit service,
• une étape de mémorisation (S520, S620), dans un serveur (315), d'un identifiant de la ressource technique déterminée en association avec un identifiant du deuxième objet (310) et un identifiant dudit moyen d'accès à ladite ressource, et
• une étape de contrôle et d'utilisation (S530), par le premier objet (305), de la ressource technique du deuxième objet (310), via le moyen d'accès à ladite ressource, **caractérisé en ce que**
l'étape de contrôle et d'utilisation (S530) incluant :
• une sous-étape (S622) de réception, par le premier objet (305), d'une commande émise par un utilisateur pour utiliser ledit service, le service étant uniquement installé sur le premier objet (305), le service étant un service de vidéoconférence requérant une capture d'un son, une capture d'une image, une restitution d'un son et/ou une restitution d'une image ;
• une sous-étape (S626) de réception d'une liste (340) par le premier objet (305), la liste comprenant plusieurs ressources techniques du même type et associées à différents objets pour mettre en oeuvre une fonction dudit service ;
• une sous-étape (S628) de recommandation, par le premier objet (305) et à destination dudit utilisateur, d'une ressource technique pour mettre en oeuvre ladite fonction du service, en fonction d'un besoin du service et d'un contexte d'utilisation du service, ladite ressource technique du deuxième objet (310) contrôlée et utilisée par le premier objet (305) correspondant à la ressource technique recommandée.

2. Procédé selon la revendication 1, dans lequel l'étape de détermination (S500) du premier objet (305) et du deuxième objet (310) comporte :
• une sous étape de détection (S602) d'une activité du premier objet (305), et/ou
• une sous étape de détection d'une activité du deuxième objet (310).

3. Procédé selon la revendication 1 ou 2, dans lequel l'étape de détermination du premier objet (305) et du deuxième objet (310) comporte :
• une sous étape de détection (S608) de l'entrée du premier objet (305) dans une zone prédéfinie, le premier objet (305) étant alors déterminé comme étant un objet apte à être utilisé par un utilisateur, et/ou
• une sous étape de détection de l'entrée du deuxième objet (310) dans une zone prédéfinie, le deuxième objet (310) étant alors déterminé comme étant un objet apte à être utilisé par un utilisateur.

4. Procédé selon l'une quelconque des revendications 1 à 3, dans lequel l'étape de détermination (S500) du premier objet (305) et du deuxième objet (310) comporte :
• une sous étape de détection (S610) du deuxième objet (310) par ledit premier objet (305), ledit deuxième objet (310) étant alors déterminé comme étant un objet apte à être utilisé par un utilisateur, et/ou
• une sous étape de détection du premier objet (305) par le deuxième objet (310), ledit premier objet (305) étant alors déterminé comme étant un objet apte à être utilisé par un utilisateur.

5. Procédé selon l'une quelconque des revendications 1 à 4, dans lequel l'étape de détermination (S510) d'une ressource technique du deuxième objet (310) comporte une sous étape de recherche (S616) de ressource technique par ledit deuxième objet (310).

6. Procédé selon l'une quelconque des revendications 1 à 5, dans lequel la ressource technique est :
• une ressource de communication,
• une ressource logicielle,
• une ressource matérielle, ou
• une ressource d'interaction.

7. Procédé selon l'une quelconque des revendications 1 à 6, dans lequel ledit au moins un moyen d'accès est une adresse IP du deuxième objet (310) comportant la ressource et une adresse d'un port associé à la ressource, permettant l'utilisation de la ressource.

8. Procédé selon l'une quelconque des revendications 1 à 7, dans lequel l'étape d'utilisation (S530) comporte :
• une sous étape de réception (S626), par le premier objet (305) de l'association mémorisée à étape de mémorisation (S520), envoyée par le serveur (315), et
• une sous étape de sélection (S630) de la ressource technique déterminée.

9. Procédé selon la revendication 8, dans lequel l'étape d'utilisation (S530) comporte une sous étape de mise en relation (S640) d'une plateforme de service avec ladite ressource technique sélectionnée.

10. Procédé selon l'une quelconque des revendications 1 à 9, dans lequel le deuxième objet n'est pas spécifiquement dédié à la mise en oeuvre dudit service.

11. Système (300) d'utilisation d'un poste de travail étendu, comprenant :
- un premier objet (305) ;
un deuxième objet (310) ;
le premier objet (305) et/ou le deuxième objet (310) étant aptes à mettre en oeuvre l'étape de détermination (S500) d'un premier objet (305) et d'un deuxième objet (310) selon la revendication 1 ; le premier objet étant également apte à mettre en oeuvre l'étape de contrôle et d'utilisation selon la revendication 1 ; le deuxième objet étant apte à mettre en oeuvre l'étape de détermination (S510) d'une ressource technique selon la revendication 1 ; et,
- un serveur (315) apte à mettre en oeuvre l'étape de mémorisation (S520) selon la revendication 1.

## Patentansprüche

1. Verfahren zur Verwendung eines erweiterten Arbeitsplatzes im Rahmen eines Videokonferenzdienstes, wobei das Verfahren umfasst:
• einen Schritt des Bestimmens (S500) eines ersten Objekts (305) und eines zweiten Objekts (310), die geeignet sind, von einem Benutzer verwendet zu werden, wobei der erweiterte Arbeitsplatz jedes der ersten und zweiten Objekte (305, 310) aufweist, wobei der Schritt des Bestimmens von dem ersten Objekt (305) und/oder dem zweiten Objekt (310) ausgeführt wird;
• einen Schritt des Bestimmens (S510), durch das zweite Objekt (310), einer technischen Ressource des zweiten Objekts (310) und eines Zugriffsmittels auf die Ressource, das die Verwendung der Ressource zum Ausführen des Dienstes ermöglicht,
• einen Schritt des Speicherns (S520, S620), in einem Server (315), einer Kennung der bestimmten technischen Ressource unter Zuordnung zu einer Kennung des zweiten Objekts (310) und einer Kennung des Zugriffsmittels auf die Ressource, und
• einen Schritt des Steuerns und Verwendens (S530), durch das erste Objekt (305), der technischen Ressource des zweiten Objekts (310), über das Zugriffsmittel auf die Ressource, **dadurch gekennzeichnet, dass** der Schritt des Steuerns und Verwendens (S530) beinhaltet:
• einen Teilschritt (S622) des Empfangens, durch das erste Objekt (305), eines Befehls, der von einem Benutzer erteilt wird, um den Dienst zu verwenden, wobei der Dienst nur auf dem ersten Objekt (305) installiert ist, wobei der Dienst ein Videokonferenzdienst ist, der eine Aufnahme eines Tons, eine Aufnahme eines Bildes, eine Wiedergabe eines Tons und/oder eine Wiedergabe eines Bildes erfordert;
• einen Teilschritt (S626) des Empfangens einer Liste (340) durch das erste Objekt (305), wobei die Liste mehrere technische Ressourcen aufweist, die vom selben Typ sind und verschiedenen Objekten zugeordnet sind, um eine Funktion des Dienstes auszuführen;
• einen Teilschritt (S628) des Empfehlens, durch das erste Objekt (305) und an den Benutzer gerichtet, einer technischen Ressource zum Ausführen der Funktion des Dienstes in Abhängigkeit von einem Erfordernis des Dienstes und von einem Verwendungskontext des Dienstes, wobei die technische Ressource des zweiten Objekts (310), die von dem ersten Objekt (305) gesteuert und verwendet wird, der empfohlenen technischen Ressource entspricht.

2. Verfahren nach Anspruch 1, wobei der Schritt des Bestimmens (S500) des ersten Objekts (305) und des zweiten Objekts (310) umfasst:
• einen Teilschritt des Detektierens (S602) einer Aktivität des ersten Objekts (305), und/oder
• einen Teilschritt des Detektierens einer Aktivität des zweiten Objekts (310).

3. Verfahren nach Anspruch 1 oder 2, wobei der Schritt des Bestimmens des ersten Objekts (305) und des zweiten Objekts (310) umfasst:
• einen Teilschritt des Detektierens (S608) des Eingebens des ersten Objekts (305) in einen vorgegebenen Bereich, wobei das erste Objekt (305) dann als ein Objekt bestimmt wird, das geeignet ist, von einem Benutzer verwendet zu werden, und/oder
• einen Teilschritt des Detektierens des Eingebens des zweiten Objekts (310) in einen vorgegebenen Bereich, wobei das zweite Objekt (310) dann als ein Objekt bestimmt wird, das geeignet ist, von einem Benutzer verwendet zu werden.

4. Verfahren nach einem der Ansprüche 1 bis 3, wobei der Schritt des Bestimmens (S500) des ersten Objekts (305) und des zweiten Objekts (310) umfasst:
• einen Teilschritt des Detektierens (S610) des zweiten Objekts (310) durch das erste Objekt (305), wobei das zweite Objekt (310) dann als ein Objekt bestimmt wird, das geeignet ist, von einem Benutzer verwendet zu werden, und/oder
• einen Teilschritt des Detektierens des ersten Objekts (305) durch das zweite Objekt (310), wobei das erste Objekt (305) dann als ein Objekt bestimmt wird, das geeignet ist, von einem Benutzer verwendet zu werden.

5. Verfahren nach einem der Ansprüche 1 bis 4, wobei der Schritt des Bestimmens (S510) einer technischen Ressource des zweiten Objekts (310) einen Teilschritt des Suchens (S616) einer technischen Ressource durch das zweite Objekt (310) umfasst.

6. Verfahren nach einem der Ansprüche 1 bis 5, wobei die technische Ressource Folgendes ist:
• eine Kommunikationsressource,
• eine Software-Ressource,
• eine Hardware-Ressource, oder
• eine Interaktionsressource.

7. Verfahren nach einem der Ansprüche 1 bis 6, wobei das mindestens eine Zugriffsmittel eine IP-Adresse des zweiten Objekts (310) ist, das die Ressource umfasst, und eine Adresse eines der Ressource zugeordneten Ports, der die Verwendung der Ressource ermöglicht.

8. Verfahren nach einem der Ansprüche 1 bis 7, wobei der Schritt des Verwendens (S530) umfasst:
• einen Teilschritt des Empfangens (S626), durch das erste Objekt (305), der in dem Schritt des Speicherns (S520) gespeicherten Zuordnung, die von dem Server (315) gesendet wird, und
• einen Teilschritt des Auswählens (S630) der bestimmten technischen Ressource.

9. Verfahren nach Anspruch 8, wobei der Schritt des Verwendens (S530) einen Teilschritt des Verbindens (S640) einer Dienstplattform mit der ausgewählten technischen Ressource umfasst.

10. Verfahren nach einem der Ansprüche 1 bis 9, wobei das zweite Objekt nicht spezifisch der Ausführung des Dienstes dediziert ist.

11. System (300) zur Verwendung eines erweiterten Arbeitsplatzes, aufweisend:
- ein erstes Objekt (305);
ein zweites Objekt (310);
wobei das erste Objekt (305) und/oder das zweite Objekt (310) geeignet sind, den Schritt des Bestimmens (S500) eines ersten Objekts (305) und eines zweiten Objekts (310) nach Anspruch 1 auszuführen; wobei das erste Objekt auch geeignet ist, den Schritt des Steuerns und Verwendens nach Anspruch 1 auszuführen; wobei das zweite Objekt geeignet ist, den Schritt des Bestimmens (S510) einer technischen Ressource nach Anspruch 1 auszuführen; und,
- einen Server (315), der geeignet ist, den Schritt des Speicherns (S520) nach Anspruch 1 auszuführen.

## Claims

1. Method for using an extended workstation as part of a videoconferencing service, the method comprising:
• a step of determining (S500) a first object (305) and a second object (310) which are able to be used by a user, the extended workstation comprising each of the first and second objects (305, 310), the determination step being implemented by the first object (305) and/or the second object (310);
• a step of determining (S510), by the second object (310), a technical resource of the second object (310) and a means of access to said resource allowing the use of said resource for the implementation of said service,
• a step of storing (S520, S620), in a server (315), an identifier of the technical resource determined in association with an identifier of the second object (310) and an identifier of said means of access to said resource, and
• a step of controlling and using (S530), by the first object (305), the technical resource of the second object (310), via the means of access to said resource, **characterized in that** the control and use step (S530) includes:
• a sub-step (S622) of receiving, by the first object (305), a command issued by a user to use said service, the service being installed only on the first object (305), the service being a videoconferencing service requiring sound capture, image capture, sound reproduction and/or image reproduction;
• a sub-step (S626) of receiving a list (340) by the first object (305), the list comprising a plurality of technical resources of the same type and associated with various objects to implement a function of said service;
• a sub-step (S628) of recommending, by the first object (305) and for said user, a technical resource for implementing said function of the service, depending on a need of the service and a context of use of the service, said technical resource of the second object (310) controlled and used by the first object (305) corresponding to the recommended technical resource.

2. Method according to Claim 1, wherein the step of determining (S500) the first object (305) and the second object (310) comprises:
• a sub-step of detecting (S602) an activity of the first object (305), and/or
• a sub-step of detecting an activity of the second object (310).

3. Method according to Claim 1 or 2, wherein the step of determining the first object (305) and the second object (310) comprises:
• a sub-step of detecting (S608) the entry of the first object (305) into a predefined area, the first object (305) then being determined to be an object able to be used by a user, and/or
• a sub-step of detecting the entry of the second object (310) into a predefined area, the second object (310) then being determined to be an object able to be used by a user.

4. Method according to any one of Claims 1 to 3, wherein the step of determining (S500) the first object (305) and the second object (310) comprises:
• a sub-step of detecting (S610) the second object (310) by said first object (305), said second object (310) then being determined to be an object able to be used by a user, and/or
• a sub-step of detecting the first object (305) by the second object (310), said first object (305) then being determined to be an object able to be used by a user.

5. Method according to any one of Claims 1 to 4, wherein the step of determining (S510) a technical resource of the second object (310) comprises a sub-step of searching (S616) for a technical resource by said second object (310).

6. Method according to any one of Claims 1 to 5, wherein the technical resource is:
• a communication resource,
• a software resource,
• a hardware resource, or
• an interaction resource.

7. Method according to any one of Claims 1 to 6, wherein said at least one access means is an IP address of the second object (310) comprising the resource and an address of a port associated with the resource, allowing the use of the resource.

8. Method according to any one of Claims 1 to 7, wherein the use step (S530) comprises:
• a sub-step of receiving (S626), by the first object (305), the association stored in the storage step (S520), sent by the server (315), and
• a sub-step of selecting (S630) the determined technical resource.

9. Method according to Claim 8, wherein the use step (S530) comprises a sub-step of relating (S640) a service platform to said selected technical resource.

10. Method according to any one of Claims 1 to 9, wherein the second object is not specifically dedicated to implementing said service.

11. System (300) for using an extended workstation, comprising:
- a first object (305);
a second object (310);
the first object (305) and/or the second object (310) being able to implement the step of determining (S500) a first object (305) and a second object (310) according to Claim 1; the first object also being able to implement the control and use step according to Claim 1; the second object being able to implement the step of determining (S510) a technical resource according to Claim 1; and,
- a server (315) able to implement the storage step (S520) according to Claim 1.
